# EUROPEAN PATENT APPLICATION

(11) **EP 4 586 443 A1**
(43) Date of publication of application: **16.07.2025**
(21) Application number: 22958128.5
(22) Date of filing: 08.09.2022
(51) Int. Cl.: H02J 7/00, A24F 40/95

(54) **COVER MEMBER**

(71) Applicant: Japan Tobacco Inc., Tokyo 105-6927 (JP)
(72) Inventor: FUJIKI, Takashi, Tokyo 130-8603 (JP); YOSHIDA, Ryo, Tokyo 130-8603 (JP)
(74) Representative: Hoffmann Eitle
(86) International application number: PCT/JP2022/033718
(87) International publication number: WO 2024/053049

(57) **Abstract**

In the present invention, a cover member attachable to and detachable from an electronic device that operates using a built-in first battery is provided with a second battery that is charged by power supplied from the electronic device.

## Description

### Technical Field

The present disclosure relates to a cover member.

### Background Art

Most of portable electronic devices operate on built-in batteries in main bodies. Batteries used can be primary batteries or can be secondary batteries. Lids or other cover members that can be attached or detached by users are attached to electronic devices that operate on primary batteries. Electronic devices that operate on secondary batteries include USB terminals or other feeder terminals for externally charging the secondary batteries. In recent years, there are electronic devices capable of wirelessly charging secondary batteries without feeder terminals.

### Citation List

### Patent Literature

PTL 1: Japanese Patent No. 6116039

### Summary of Invention

### Technical Problem

Incidentally, recent portable electronic devices consume large amounts of electric power and are also desired to be used for long periods of time. As measures for these conflicting requests, large-capacity built-in batteries and power-saving electronic devices are implemented. However, these efforts have limitations.

The present disclosure provides a technology to increase the amount of electric power usable in the whole of an electronic device to which a cover member is attached in view of the above problem.

### Solution to Problem

An aspect of the present disclosure provides a cover member that is attachable to and detachable from an electronic device that operates on a built-in first battery. The cover member includes a second battery charged with electric power supplied from the electronic device.

The cover member may further include a charging circuit that charges the second battery with electric power supplied from the electronic device.

The cover member may further include a feeder circuit that supplies electric power to the electronic device.

In the cover member, when a level of the first battery is lower than or equal to a predetermined reference, the feeder circuit may charge the first battery.

Supply of electric power by the feeder circuit may be performed in response to instructions from the electronic device.

The feeder circuit may supply electric power to a communicator of the electronic device.

The cover member may further include a notifier that notifies information upon receiving electric power supplied from the second battery.

When the electronic device is an aerosol generating device including a heater that heats an aerosol source, the feeder circuit may supply electric power to the heater.

When the electronic device is an aerosol generating device including a heater that heats an aerosol source, a main body attached to the aerosol generating device may cover part of a surface of the aerosol generating device in an operable state.

Attachment of a main body to the aerosol generating device may be one of conditions that the aerosol source is allowed to be heated by the heater.

A main body may be allowed to operate a switch on the electronic device side by a user pushing the main body in a state attached to the electronic device.

The cover member may further include an operating portion that notifies the electronic device upon receiving operation of a user.

A main body attached to the electronic device may provide a unified appearance with a part not covered with the main body in the electronic device in an operable state.

### Advantageous Effects of Invention

According to the aspect of the present disclosure, it is possible to increase the amount of electric power usable in the whole of an electronic device to which a cover member is attached.

### Brief Description of Drawings

[Fig. 1] Fig. 1 is a front-side view of an aerosol generating device from diagonally above.
[Fig. 2] Fig. 2 is a front-side view of the aerosol generating device from diagonally below.
[Fig. 3] Fig. 3 is a view of the aerosol generating device from diagonally above with a shutter removed.
[Fig. 4] Fig. 4 is a front view of a main device in a state where a front panel is removed.
[Fig. 5] Fig. 5 is a back view of the front panel removed from the main device.
[Fig. 6] Fig. 6 is a diagram that schematically illustrates the internal configuration of the aerosol generating device.
[Fig. 7] Fig. 7 is a diagram that schematically illustrates a connection relation between the front panel and a power supply system circuit in the main device.
[Fig. 8] Fig. 8 is a flowchart that illustrates an example of a front panel attachment detection operation that is executed by a controller.
[Fig. 9] Fig. 9 is a flowchart that illustrates an example of USB charging operation that is executed by a controller.
[Fig. 10] Fig. 10 is a timing chart that illustrates a USB charging operation.
[Fig. 11] Fig. 11 is a flowchart that illustrates an operation in which a secondary battery of the main device is charged by a secondary battery of the front panel.
[Fig. 12] Fig. 12 is a timing chart that illustrates auxiliary charging that uses the front panel as an external power supply.
[Fig. 13] Fig. 13 is a graph that illustrates the amount of electric power usable in the whole of the aerosol generating device.
[Fig. 14] Fig. 14 is a diagram that schematically illustrates a connection relation between the front panel and a power supply system circuit in the main device, adopted in a second embodiment.
[Fig. 15] Fig. 15 is a diagram that schematically illustrates a connection relation between the front panel and a power supply system circuit in the main device, adopted in the second embodiment.
[Fig. 16] Fig. 16 is a view that illustrates an appearance example of an aerosol generating device to which the front panel with a notifier is attached.
[Fig. 17] Fig. 17 is a diagram that schematically illustrates the internal configuration of an aerosol generating device used in a fourth embodiment.
[Fig. 18] Fig. 18 is a diagram that schematically illustrates a connection relation between the front panel and a power supply system circuit in the main device, used in the fourth embodiment.
[Fig. 19] Fig. 19 is a back view of the front panel used in a fifth embodiment.
[Fig. 20] Fig. 20 is a diagram that schematically illustrates the internal configuration of an aerosol generating device used in the fifth embodiment.
[Fig. 21] Fig. 21 is a diagram that schematically illustrates a connection relation between the front panel and a power supply system circuit in the main device, used in the fifth embodiment.

### Description of Embodiments

Hereinafter, embodiments related to the present disclosure will be described with reference to the drawings. Like reference signs are assigned to the same portions in the drawings.

### <Terms>

Aerosol generating devices according to embodiments each are one mode of an electronic cigarette.

In the following description, a material that is generated by the aerosol generating devices is referred to as aerosol. An aerosol means a mixed element of minute liquid or solid particles suspended in gas with air or other gas.

In each of the embodiments, the aerosol generating device that generates an aerosol without combustion will be described.

In the following description, an action that a user inhales an aerosol generated by the aerosol generating device is referred to as "inhalation" or "puff".

In each of the embodiments, the aerosol generating device to which a solid aerosol source can be attached will be described. A casing that houses a solid aerosol source is also referred to as "capsule" or "stick substrate" according to a product form. Capsules and stick substrates are consumables. Therefore, a guide for replacement is set for capsules and stick substrates.

### <First Embodiment>

### <Appearance Example>

Initially, an appearance example of the aerosol generating device that is used in a first embodiment will be described.

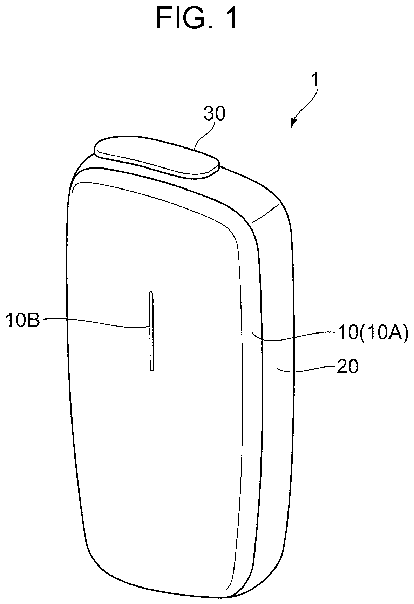

Fig. 1 is a front-side view of the aerosol generating device 1 from diagonally above.

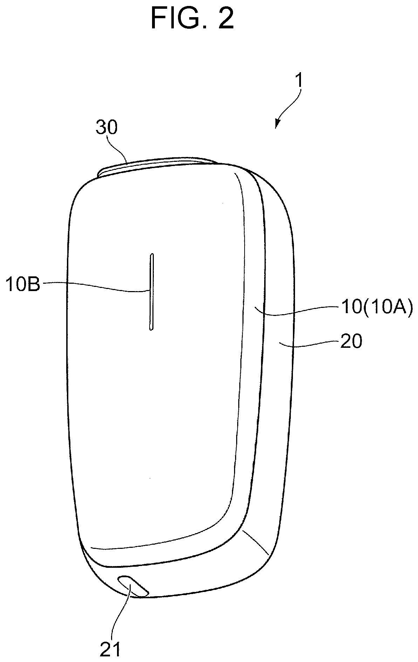

Fig. 2 is a front-side view of the aerosol generating device 1 from diagonally below.

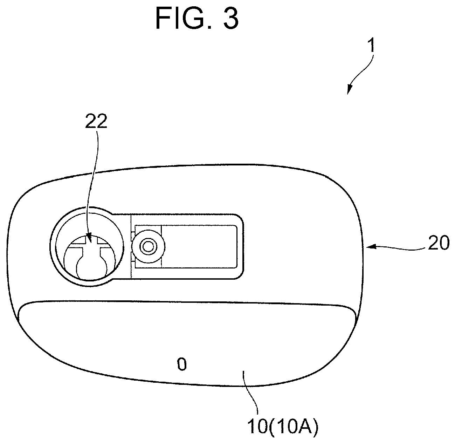

Fig. 3 is a view of the aerosol generating device 1 from above with a shutter 30 removed.

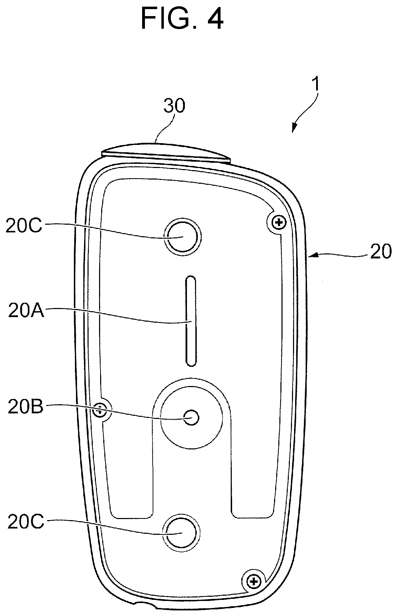

Fig. 4 is a front view of a main device 20 in a state where the front panel 10 is removed.

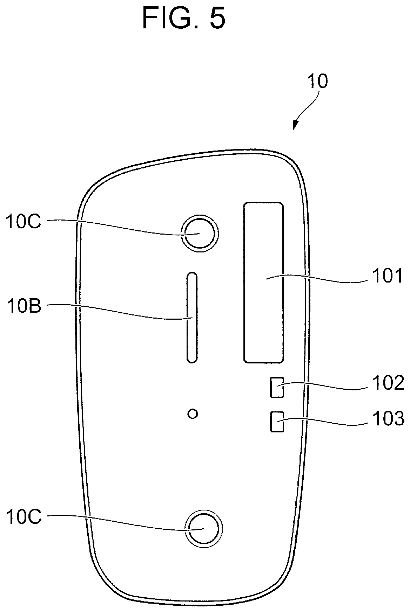

Fig. 5 is a back view of the front panel 10 removed from the main device 20.

The aerosol generating device 1 that is used in the present embodiment has such a size that a user is able to hold the aerosol generating device 1 with one hand.

The aerosol generating device 1 includes the main device 20, the front panel 10 attached to the front of the main device 20, and the shutter 30 disposed at the top surface of the main device 20 and operable so as to slide along the top surface.

The front panel 10 is a member that is attachable to and detachable from the main device 20. Attachment and detachment of the front panel 10 are performed by a user.

The front panel 10 attached to the main device 20 covers a front part of the main device 20 as illustrated in Figs. 1 and 2. In other words, after the front panel 10 is attached as well, a part other than the front part of the main device 20 can be viewed from an outside. For example, the side surface, back surface, top surface, and bottom surface of the main device 20 can be viewed from an outside after the front panel 10 is attached as well.

As illustrated in Figs. 1 and 2, the front panel 10 attached to the main device 20 is continuously flush with the side surface, top surface, and bottom surface of the main device 20 without any step and provides a unified appearance.

In this way, one of the roles of the front panel 10 is decoration. The side surface, top surface, and bottom surface of the main device 20 are examples of the part not covered with the front panel 10.

A window 10B is provided in the front panel 10. The window 10B is provided at a position facing a light-emitting element of the main device 20 side. In the case of the first embodiment, a light emitting diode (LED) 20A (see Fig. 4) is used as the light-emitting element.

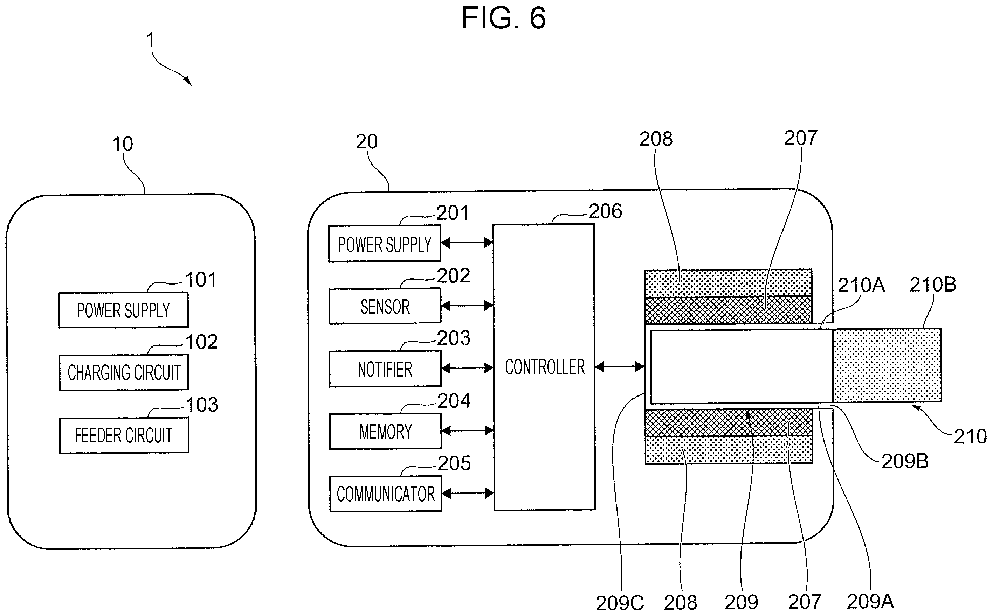

The window 10B in the first embodiment is made of a raw material that transmits light. Alternatively, the window 10B may be a slit that extends through from a front surface to a back surface. Turning-on and blinking of the light-emitting element indicate the status or the like of the operation of the aerosol generating device 1. The status of the operation also includes an error. Turning-on and blinking of the light-emitting element are controlled by a controller 206 (see Fig. 6) (described later).

The front panel 10 plays not only a role as decoration but also a role of buffering propagation of heat released from the main device 20 or the like. Therefore, in the case of the present embodiment, generation of an aerosol is permitted only when the front panel 10 is attached to the main device 20. In other words, the front panel 10 attached to the main device 20 provides a unified appearance with the main device 20 in a state where generation of an aerosol is possible.

Furthermore, the front panel 10 plays a role in protecting the main device 20 from dirt, flaw, or the like. The secondary battery-mounted front panel 10 (described later) plays a role in increasing the amount of electric power usable in the whole of the aerosol generating device 1.

The front panel 10 used in the present embodiment deforms when a user pushes a position below the window 10B with a finger tip and returns to an original form when the user stops pushing.

A power supply 101 capable of charging and discharging electricity, a charging circuit 102 that charges the power supply 101 with electric power supplied from the main device 20, and a feeder circuit 103 that supplies the main device 20 with electric power stored in the power supply 101 are installed on the inner side of the front panel 10 used in the present embodiment.

In the case of the present embodiment, for example, a film-type lithium ion secondary battery or capacitor is used as the power supply 101. Arrangement of the power supply 101, the charging circuit 102, and the feeder circuit 103 in Fig. 5 is an example. A plurality of the power supplies 101 may be installed in the front panel 10.

The front panel 10 in the present embodiment is an example of the cover member. A main body panel 10A that provides the appearance of the front panel 10 illustrated in Figs. 1 and 2 is an example of the main body.

A type C universal serial bus (USB) connector 21 is provided at the bottom surface side of the main device 20. The shape or type of the USB connector 21 is an example. In other words, the USB connector 21 may be a USB other than type C. In the case of the first embodiment, the USB connector 21 is, for example, used to charge a power supply 201 (see Fig. 6) built in the main device 20.

A hole 22 for inserting a stick substrate 210 (see Fig. 6) that houses an aerosol source is provided at a top surface part of the main device 20. In the stick substrate 210 used in the present embodiment, a solid aerosol source is housed in a paper cylinder molded in a substantially cylindrical shape. The hole 22 is exposed when the shutter 30 is caused to slide to an open position and is hidden when the shutter 30 is caused to slide to a closed position.

In the case of the first embodiment, the hole 22 has a cylindrical shape substantially the same type as the stick substrate 210. The diameter of an opening part of the hole 22 is such a dimension that the stick substrate 210 can be inserted. In other words, the diameter of the stick substrate 210 is such a dimension that the stick substrate 210 can be inserted into the hole 22.

For example a magnet is attached to the back surface of the shutter 30. On the other hand, a Hall IC is attached to the main device 20 in a movable range of the shutter 30.

A Hall IC is a magnetic sensor made up of a Hall element, an operational amplifier, and the like, and outputs a voltage according to the strength of a magnetic field that crosses the Hall element.

In the present embodiment, the open or closed state of the shutter 30 is detected from a change in voltage output from the Hall IC as a result of a slide of the shutter 30. In other words, whether the shutter 30 is at the open position or the closed position is detected.

A button 20B is disposed at substantially the center of the front surface of the main device 20. As described above, the button 20B is allowed to be operated in a state where the front panel 10 remains attached.

The button 20B is, for example, used to turn on or off the power of the main device, turn on or off the supply of electric power to a heater 207 (see Fig. 6) that heats an aerosol source, provide pairing instructions for Bluetooth (registered trademark), and the like.

When the button 20B is pressed and held (for example, pressed for five seconds or longer) in a state where the front panel 10 is removed from the main device 20, a reset function activates.

In the present embodiment, Bluetooth Low Energy (BLE) is used as Bluetooth.

Magnets 20C used to attach the front panel 10 are disposed at the upper part and lower part of the front surface of the main device 20. The magnets 20C are provided at positions facing magnets 10C provided on the inner side of the front panel 10. When, for example, the magnets 10C of the front panel 10 are N-poles, the magnets 20C of the main device 20 side are S-poles. Due to the attraction between the magnets, the front panel 10 is detachably attached to the main device 20.

Any one of the magnet 10C and the magnet 20C may be iron or another magnetic piece of metal. Attachment of the front panel 10 to the main device 20 is detected by the Hall IC provided at the main device 20 side.

Other than the above, various electronic components needed to generate an aerosol are built in the main device 20. In this meaning, the main device 20 is an example of an electronic device specialized to generate an aerosol. In the narrow meaning, the main device 20 is referred to as aerosol generating device.

### <Internal Configuration>

Fig. 6 is a diagram that schematically illustrates the internal configuration of the aerosol generating device 1. Fig. 6 illustrates a state where the stick substrate 210 is set in the main device 20. The internal configuration illustrated in Fig. 6 aims to illustrate components provided in the front panel 10 and the main device 20 and a positional relationship of them. Therefore, the appearance of the components and the like illustrated in Fig. 6 does not necessarily coincide with the above-described appearance view.

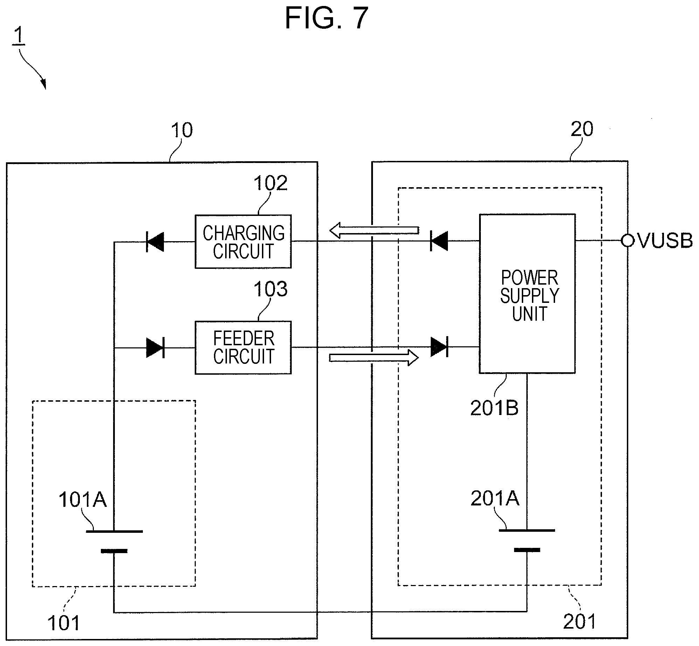

Fig. 7 is a diagram that schematically illustrates a connection relation between the front panel 10 and a power supply system circuit in the main device 20.

As illustrated in Fig. 6, the front panel 10 includes the power supply 101 that stores electricity, the charging circuit 102 that charges the power supply 101 with electric power supplied from the main device 20 side, and the feeder circuit 103 that supplies electric power from the power supply 101 to the main device 20 and the like.

Fig. 7 illustrates a case where the power supply 101 is a secondary battery 101A. Here, the secondary battery 101A is, for example, a lithium ion secondary battery. The secondary battery 101A is an example of the second battery. The secondary battery 101A functions as a sub-battery or auxiliary battery for the secondary battery 201A of the main device 20 side.

The charging circuit 102 is made up of, for example, a boost DC-DC circuit. The charging circuit 102 in the present embodiment is a circuit that supplies a voltage of, for example, 4.2 V to the secondary battery 101A when electric power is supplied from the main device 20. A circuit that prevents backflow of current is provided in the charging circuit 102.

The feeder circuit 103 is made up of, for example, a boost DC-DC circuit. The feeder circuit 103 is a circuit that supplies a constant voltage (for example, 5 V) to the main device 20 regardless of the output voltage of the power supply 101. A circuit that prevents backflow of current is provided in the feeder circuit 103.

In this regard, supply of electric power from the main device 20 to the charging circuit 102 and supply of electric power from the feeder circuit 103 to the main device 20 may be contact power supply or contactless power supply.

For example, a method with mechanical contact of an electrode, a method of mechanical contact with a spring-loaded electrode pin (pogo pin), or a method of coupling of a connector, is used for contact power supply.

For example, supply of electric power using an electromagnetic induction method, such as a Qi standard and a near field communication (NFC), or supply of electric power using an electric field induction method is used for contactless power supply.

On the other hand, the main device 20 includes the power supply 201, a sensor 202, a notifier 203, a memory 204, the communicator 205, the controller 206, the heater 207, a heat insulator 208, and a holder 209.

As described above, Fig. 6 illustrates a state where the stick substrate 210 is held by the holder 209. In this state, an aerosol is inhaled by a user.

The power supply 201 is a unit that supplies electric power to the front panel 10 or the main device 20. The power supply 201, for example, stores electric power by using a lithium ion secondary battery or a capacitor. Fig. 7 illustrates an example in which electric power is stored in the secondary battery 201A. The secondary battery 201A is an example of the first battery.

The secondary battery 201A can be charged from an external power supply. In the case of the present embodiment, for example, a commercial power supply, a mobile battery, and the secondary battery 101A of the front panel 10 are assumed as external power supplies.

Other than the above, a power supply unit 201B is provided in the power supply 201.

The power supply unit 201B switches a power supply path and converts a voltage level in accordance with an operation mode.

The power supply unit 201B outputs for example, 3.3 V (hereinafter, also referred to as "system power supply") to a power supply line to which the sensor 202, the notifier 203 (except the LED 20A), the memory 204, the communicator 205, and the controller 206 are connected.

The power supply unit 201B outputs , for example, 5 V to a power supply line to which the LED 20A is connected and outputs, for example, 4.2 V to a power supply line to which the heater 207 is connected.

When the secondary battery 201A is charged from an external power supply, the power supply unit 201B outputs, for example, 4.2 V to a power supply line to which the secondary battery 201A is connected.

External power supplies here include not only a commercial power supply and a mobile battery but also the secondary battery 101A of the front panel 10.

Because a USB cable is used to supply electric power from a commercial power supply or a mobile battery, a feeder terminal corresponding to them is indicated by VUSB in Fig. 7.

The sensor 202 is an electronic component that detects various pieces of information on the main device 20.

Examples of the sensor 202 include a pressure sensor, such as a microphone capacitor, and a flow sensor. The sensor 202 serving as a sensor outputs detected information to the controller 206. When, for example, a change in atmospheric pressure resulting from inhalation or flow of air is detected, the sensor 202 outputs a numeric value indicating inhalation of a user to the controller 206.

The sensor 202 is, for example, an input device that receives input from a user. The input device is, for example, a button or a switch. In the present embodiment, the button 20B (see Fig. 4) is used as the input device.

The button 20B is used to, for example, switch the on and off states of a main power or switch the start and stop of power supply to the heater 207 (that is, the start and stop of generating an aerosol).

The content of instructions of a user is output from the sensor 202 to the controller 206. The button 20B is not only an example of the button but also an example of the switch.

Other than the above, the sensor 202 can be a temperature sensor that detects the temperature of the heater 207. The temperature sensor, for example, detects the temperature of the heater 207 in accordance with the electric resistance value of a conductive track of the heater 207. The detected electric resistance value is output from the sensor 202 to the controller 206. The controller 206 calculates the temperature of the heater 207 in accordance with the electric resistance value. In other words, the controller 206 calculates the temperature of the stick substrate 210 held by the holder 209.

Other than the above, the sensor 202 can be a capacitance sensor, an optical sensor, a pressure sensor, or the like, that detects insertion of the stick substrate 210 to the holder 209.

The sensor 202 can be an optical color sensor, a radio frequency identification (RFID) reader, or the like, for individual identification of the stick substrate 210.

The sensor 202 can be a biometric sensor that measures the heart rate or the like of a user, a fingerprint sensor used to unlock, or the like.

The sensor 202 can be an acceleration sensor, a gyro sensor, or the like, that detects the motion of a user.

The notifier 203 is an electronic component that notifies a user of various pieces of information on the main device 20. The notifier 203 can be the LED 20A or another light-emitting device. For example, the LED 20A emits light in a different pattern when the power supply 201 needs to be charged, when the power supply 201 is being charged, or when there is an abnormality in the main device 20.

Patterns here include a difference in color, a difference in timing for turning on or turning off, and the like.

The notifier 203 may be made up of a display device that displays an image, a sound output device that outputs sound, a vibration device that vibrates the main device 20, or the like, together with the above-described light-emitting device or instead of the light-emitting device. The light-emitting device, the display device, the sound output device, the vibration device, and the like are examples of the notifier that notifies information.

Other than the above, the notifier 203 may notify a user of a state where inhalation of an aerosol is allowed. This notification is provided when the temperature of the stick substrate 210 heated by the heater 207 reaches a predetermined temperature.

The memory 204 stores various pieces of information regarding the operation of the main device 20. The memory 204 is, for example, a non-volatile storage medium, such as a flash memory.

Examples of the information stored in the memory 204 include an operating system (OS), firmware (FW), and other programs.

Examples of the information stored in the memory 204 include information on control over electronic components. The information on control is information on inhalation of a user, such as the number of times of inhalation, inhalation time, and an accumulated inhalation time period.

The communicator 205 is a communication interface for implementing communication between the main device 20 and another device. The communicator 205 communicates with another device in a system that conforms with a selected wired or wireless communication standard. Examples of the communication standard here include a wireless local area network (LAN), a serial signal line, Wi-Fi (registered trademark), and Bluetooth (registered trademark).

For example, the communicator 205 transmits information on inhalation of a user to a smartphone. The communicator 205 downloads from a server an update program and a profile that defines a change in the temperature of the heater 207 in a heating mode. The communicator 205 transmits the start or stop of power supply to the feeder circuit 103.

The controller 206 functions as an arithmetic processing unit and a control device and controls the operation of the main device 20 in accordance with various programs. The controller 206 may control the operation of the charging circuit 102 and the operation of the feeder circuit 103 provided in the front panel 10.

A control signal is transmitted through a signal line different from the power supply line. For example, a serial communication method, such as an inter-integrated circuit (I2C) communication method, a serial peripheral interface (SPI) communication method, and a universal asynchronous receiver transmitter (UART) communication method, is used for communication in the main device 20. The SPI communication method or the UART communication method is used for communication with the charging circuit 102 and feeder circuit 103 of the front panel 10. For example, BLE is used as a communication line.

The controller 206 is implemented by, for example, an electronic circuit, such as a central processing unit (CPU), a micro processing unit (MPU), a graphical processing unit (GPU), an application specific integrated circuit (ASIC), a field programmable gate array (FPGA), and a digital signal processor (DSP).

The controller 206 may include a read only memory (ROM) that stores programs, computation parameters, and the like and a random access memory (RAM) that temporarily stores parameters and the like that vary as needed.

The controller 206 executes various processes and controls through running programs.

Examples of the processes and controls here include supplying electric power from the power supply 201 to another electronic component, charging the power supply 201, detecting information with the sensor 202, notifying information with the notifier 203, storing and reading information with the memory 204, and transmitting and receiving information by the communicator 205. Communication performed by the communicator 205 also includes communication with the front panel 10.

Other than the above, the controller 206 also controls input of information to an electronic component, a process based on information output from an electronic component, and the like.

The holder 209 is a substantially cylindrical casing. In the present embodiment, a space inside the holder 209, defined by an inner wall and a bottom surface, is referred to as an internal space 209A. The internal space 209A has a substantially columnar shape.

The holder 209 has an opening 209B that communicates the internal space 209A with an outside. The stick substrate 210 is inserted into the internal space 209A through the opening 209B. The stick substrate 210 is inserted until its distal end contacts with a bottom 209C.

The stick substrate 210 is only partially accommodated in the internal space 209A. A state where the stick substrate 210 is accommodated in the internal space 209A is referred that the stick substrate 210 is held in the internal space 209A.

The holder 209 is formed such that the inside diameter of at least part of the holder 209 in an axial direction is smaller than the outside diameter of the stick substrate 210.

Therefore, an outer periphery of the stick substrate 210 inserted in the internal space 209A receives pressure from the inner wall of the holder 209. With this pressure, the stick substrate 210 is held in the internal space 209A.

The holder 209 also has the function to define a flow path for air passing through the stick substrate 210. An air inlet hole that is an inlet for air into the flow path is disposed at, for example, the bottom 209C. The opening 209B is an air outlet hole that is an outlet for air.

In the case of the present embodiment, only part of the stick substrate 210 is held by the holder 209, and the remaining part protrudes outward from a casing. Hereinafter, the part held by the holder 209 is referred to as substrate 210A, and the part protruding from the casing is referred to as inhalation port 210B.

An aerosol source is housed in at least the substrate 210A. The aerosol source is a material that is atomized when heated to generate an aerosol.

The aerosol source contains not only shredded tobacco but also a substance derived from tobacco, such as a processed substance and the like obtained by forming tobacco raw material into a granular form, a sheet form, or a powder form.

Furthermore, the aerosol source may contain a substance not derived from tobacco and produced from a plant other than tobacco, such as mint and a herb. For example, the aerosol source may contain a flavoring agent component, such as menthol.

When the main device 20 is a medical inhaler, the aerosol source may contain a medicine for a patient to inhale. The aerosol source is not limited to a solid and may be, for example, a polyhydric alcohol or a liquid, such as water. Examples of the polyhydric alcohol include glycerine and propylene glycol.

At least part of the inhalation port 210B is held in the mouth of a user during inhalation.

When the user inhales with the inhalation port 210B in his or her mouth, air flows into the internal space 209A through the air inlet hole. Air flowing in passes through the internal space 209A and the substrate 210A and reaches the inside of the mouth of the user. Air that reaches the inside of the mouth of the user contains an aerosol generated in the substrate 210A.

The heater 207 is made up of a heater or another heat generator. The heater 207 is made of a selected raw material, such as a metal and polyimide. The heater 207 is formed in, for example, a film shape and attached to the outer periphery of the holder 209.

When the heater 207 produces heat, the aerosol source included in the stick substrate 210 is heated and atomized. The atomized aerosol source is mixed with air or the like to generate an aerosol.

In the case of Fig. 6, a part around the outer circumference of the stick substrate 210 is initially heated, and a range heated gradually moves to around the center.

Therefore, atomization of the aerosol source begins around the outer circumference of the stick substrate 210 and gradually moves to around the center.

The heater 207 produces heat by using electric power supplied from the power supply 201. When, for example, predetermined user input is detected through the sensor 202, supply of electric power to the heater 207 is permitted. User input here is operation to the shutter 30 (see Fig. 1) or the button 20B (see Fig. 4). However, supply of electric power to the heater 207 needs a precondition that the front panel 10 (see Fig. 1) is attached to the main device 20. By attaching the front panel 10, a temperature transferred to the hand of a user can be decreased as compared to when the front panel 10 is not attached.

When the temperature of the stick substrate 210 heated by the heater 207 reaches a predetermined temperature, inhalation by a user is allowed. Inhalation of an aerosol by a user is detected by a flow sensor or the like of the sensor 202, and is saved in the memory 204.

After that, when the predetermined user input is detected by the sensor 202, supply of electric power to the heater 207 is stopped. A method in which electric power is supplied to the heater 207 in a period during which inhalation by a user is detected by the sensor 202 and electric power supplied to the heater 207 is stopped when inhalation by the user is not detected by the sensor 202 may be adopted.

In the example of Fig. 6, the heater 207 is disposed outside the stick substrate 210. Alternatively, the heater 207 may be a blade-type piece of metal inserted into the stick substrate 210 for use or may be a piece of metal built in the stick substrate 210. When a piece of metal that acts as the heater 207 is built in the stick substrate 210, an induction heating coil just needs to be disposed around the holder 209.

The heat insulator 208 is a member that reduces propagation of heat generated in the heater 207 to surroundings. Therefore, the heat insulator 208 is disposed so as to cover at least the outer periphery of the heater 207.

The heat insulator 208 is made of, for example, a vacuum heat insulator, an aerogel heat insulator, or the like. A vacuum heat insulator is, for example, a heat insulator of which heat conduction by gas is brought close to zero as much as possible by wrapping glass wool, silica (silicon powder), and the like with a resin film into a high-vacuum state.

### <Processing Operation Example>

Hereinafter, a processing operation example that is executed by the controller 206 (see Fig. 6) will be described.

### <Attachment Detection Operation>

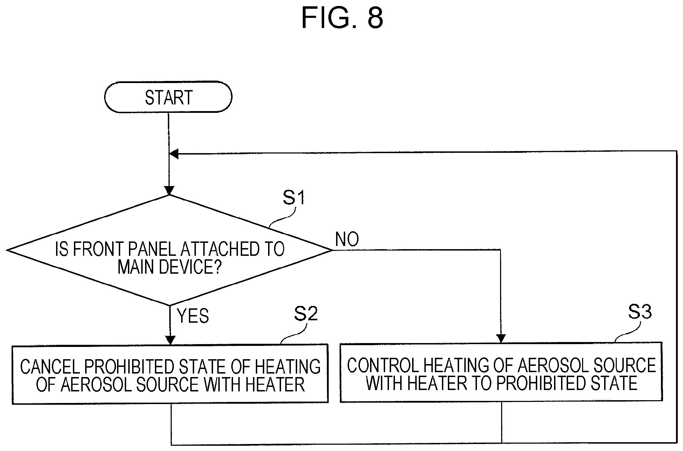

Fig. 8 is a flowchart that illustrates an example of the attachment detection operation of the front panel 10, which is executed by the controller 206. The operation is an operation that is executed not only before heating operation of the heater 207 (see Fig. 6) is started but also after heating is started and is constantly executed in a background. A sign "S" shown in the drawing means step.

Initially, the controller 206 determines whether the front panel 10 (see Fig. 1) is attached to the main device 20 (see Fig. 1) (step 1).

When the front panel 10 is attached to the main device 20, an affirmative result is obtained in step 1. On the other hand, when removed from the front panel 10 from the front of the main device 20, a negative result is obtained in step 1. Attachment or removal of the front panel 10 is determined in accordance with an output signal of the Hall IC.

When an affirmative result is obtained in step 1, the controller 206 cancels a prohibited state of heating of an aerosol source with the heater 207 (step 2).

However, cancellation of a prohibited state of heating and start of heating are different. Heating of the stick substrate 210 (see Fig. 6) that is an aerosol source is started when the button 20B (see Fig. 4) is pressed from the front panel 10 and held for a second or longer.

When a negative result is obtained in step 1, the controller 206 controls heating of an aerosol source with the heater 207 to a prohibited state (step 3).

When step 2 or step 3 is executed, the controller 206 returns to step 1 and repeats the determination as to whether the front panel 10 is attached to the main device 20.

With this attachment detection operation, a user does not need to directly touch the main device 20 during heating operation.

### <USB Charging Operation>

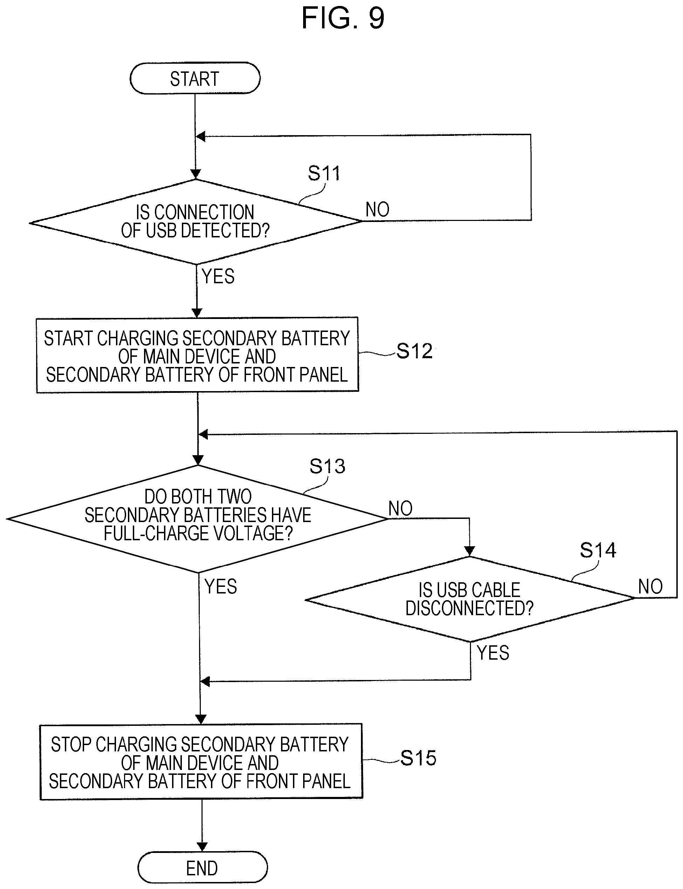

Fig. 9 is a flowchart that illustrates an example of a USB charging operation that is executed by the controller 206. The USB charging operation is also constantly executed in the background.

Initially, the controller 206 determines whether connection of USB is detected (step 11).

When a USB cable is connected to the USB connector 21 (see Fig. 2), an affirmative result is obtained in step 11. On the other hand, when a USB cable is not connected to the USB connector 21, a negative result is obtained in step 11.

When a negative result is obtained in step 11, the controller 206 repeats the determination of step 11.

On the other hand, when an affirmative result is obtained in step 11, the controller 206 starts charging the secondary battery 201A of the main device 20 and the secondary battery 101A of the front panel 10 (step 12). Actual charging may adopt a method in which any one of the secondary battery 201A of the main device 20 and the secondary battery 101A of the front panel 10 is charged to a full capacity first and subsequently the other one is charged to a fully capacity. The secondary battery 201A of the main device 20 and the secondary battery 101A of the front panel 10 may be charged in parallel.

Subsequently, the controller 206 determines whether the two secondary batteries 101A, 201A each have a full-charge voltage (step 13).

When any one of the two has not reached a full-charge voltage, a negative result is obtained in step 13. On the other hand, when both have reached a full-charge voltage, an affirmative result is obtained in step 13.

When a negative result is obtained in step 13, the controller 206 determines whether the USB cable is removed (step 14).

When the USB cable remains connected, a negative result is obtained in step 14. On the other hand, when the USB cable is disconnected during charging, an affirmative result is obtained in step 14.

When a negative result is obtained in step 14, the controller 206 returns to step 13 and repeats the determination of step 13.

When an affirmative result is obtained in step 13 or when an affirmative result is obtained in step 14, the controller 206 stops charging the secondary battery 201A of the main device 20 and the secondary battery 101A of the front panel 10 (step 15).

After that, the controller 206 ends the USB charging operation.

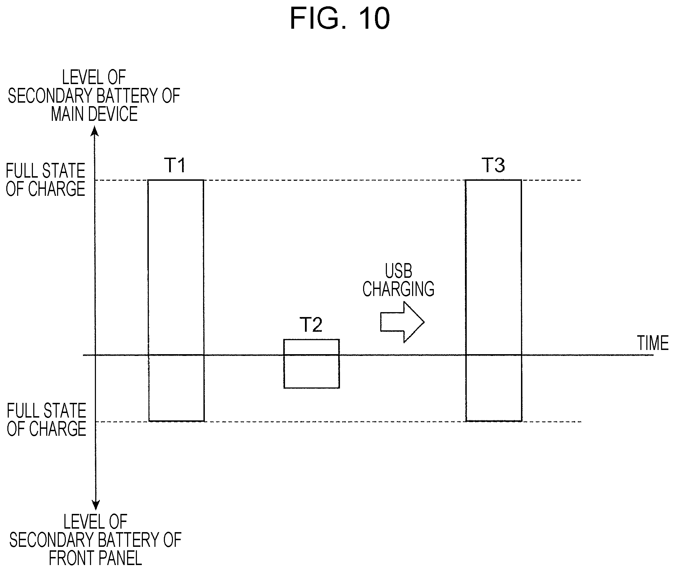

Fig. 10 is a timing chart that illustrates a USB charging operation.

The abscissa axis of the timing chart represents time, the upper half of the ordinate axis represents the level of the secondary battery 201A in the main device 20, and the lower half of the ordinate axis represents the level of the secondary battery 101A in the front panel 10.

In the case of Fig. 10, the secondary batteries 101A, 201A in an initial state T1 both are in a full state of charge.

In the case of time T2, both the level of the secondary battery 201A of the main device 20 and the level of the secondary battery 101A of the front panel 10 have decreased from a full state of charge.

When the USB cable is connected in this state, USB charging is started.

As a result, both the secondary batteries 101A, 201A return to a full state of charge at time T3 when USB charging ends.

### <Auxiliary Charging Operation>

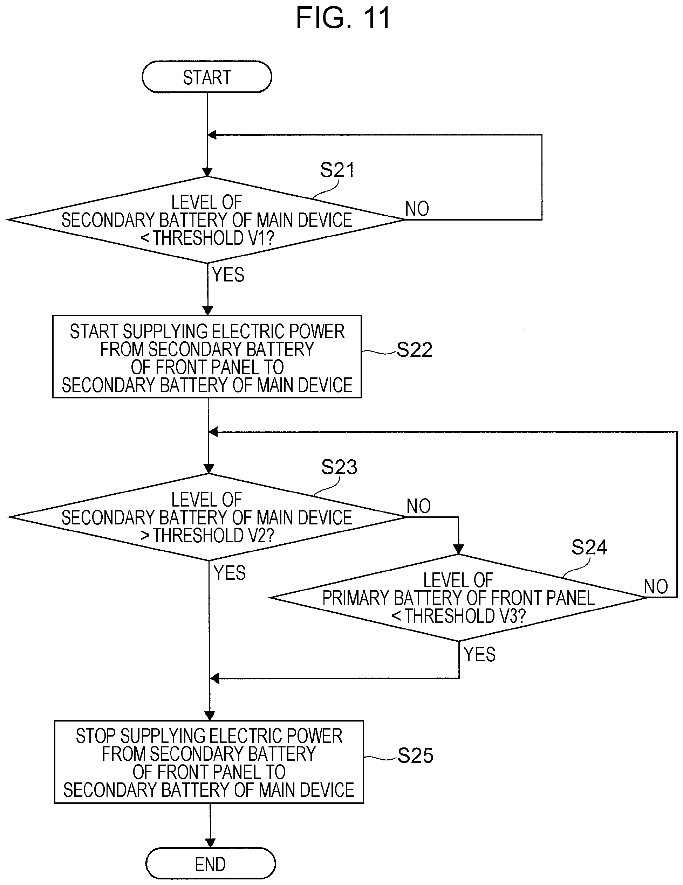

Fig. 11 is a flowchart that illustrates an operation (that is, auxiliary charging) in which the secondary battery 201A of the main device 20 is charged by the secondary battery 101A of the front panel 10.

The controller 206 determines whether the level of the secondary battery 201A of the main device 20 is lower than a threshold V1 (step 21). The threshold V1 here is an example of a predetermined reference.

When the level is higher than or equal to the threshold V1, a negative result is obtained in step 21. On the other hand, when the level is lower than the threshold V1, an affirmative result is obtained in step 21.

When a negative result is obtained in step 21, the controller 206 repeats the determination of step 21.

When an affirmative result is obtained in step 21, the controller 206 starts supplying electric power from the secondary battery 101A of the front panel 10 to the secondary battery 201A of the main device 20 (step 22).

In the case of the present embodiment, the controller 206 instructs the feeder circuit 103 of the front panel 10 to start supplying electric power. As a result, a voltage boosted to, for example, 5 V is supplied from the output terminal of the feeder circuit 103 to the power supply unit 201B (see Fig. 7) of the main device 20. The power supply unit 201B performs DC-DC conversion from a voltage of 5 V supplied from the secondary battery 101A as an external power supply to 4.2 V and supplies 4.2 V to the power supply line to which the secondary battery 201A is connected.

Thus, charging of the secondary battery 201A of the main device 20 is started.

Subsequently, the controller 206 determines whether the level of the secondary battery 201A of the main device 20 is higher than a threshold V2 (> V1) (step 23).

When the level of the secondary battery 201A is lower than or equal to the threshold V2, a negative result is obtained in step 23. On the other hand, when the level of the secondary battery 201A is higher than the threshold V2, an affirmative result is obtained in step 23.

When a negative result is obtained in step 23, the controller 206 determines whether the level of the secondary battery 101A of the front panel 10 is lower than a threshold V3 (step 24). The threshold V3 here defines the timing to stop supplying electric power from the front panel 10 to the main device 20.

When the level of the secondary battery 101A of the front panel 10 is higher than or equal to the threshold V3, a negative result is obtained in step 24. On the other hand, when the level of the secondary battery 101A of the front panel 10 is lower than the threshold V3, an affirmative result is obtained in step 24.

When a negative result is obtained in step 24, the controller 206 returns to step 23 and repeats the determination of step 23.

When an affirmative result is obtained in step 23 or when an affirmative result is obtained in step 24, the controller 206 stops supplying electric power from the secondary battery 101A of the front panel 10 to the secondary battery 201A of the main device 20 (step 25).

A case where an affirmative result is obtained in step 23 is a case where the level of the secondary battery 201A of the main device 20 is recovered to a target level. On the other hand, a case where an affirmative result is obtained in step 24 is a case where the level of the secondary battery 101A of the front panel 10 is low.

After that, the controller 206 ends charging the secondary battery 201A of the main device 20 using the secondary battery 101A of the front panel 10 as an external power supply.

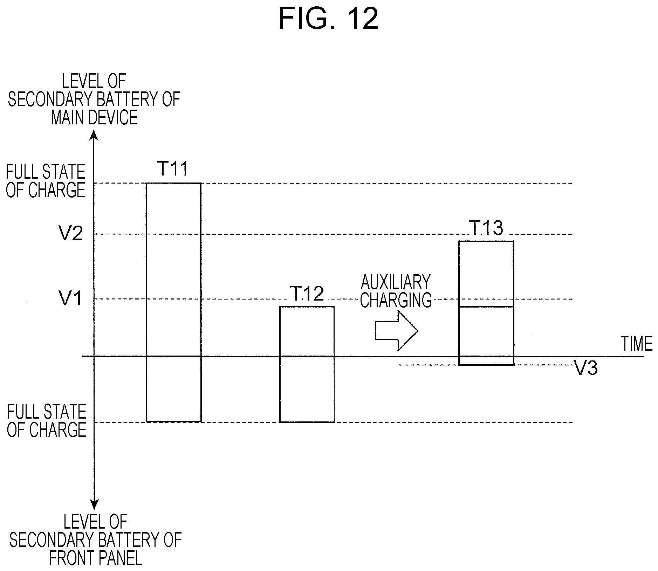

Fig. 12 is a timing chart that illustrates auxiliary charging that uses the front panel 10 as an external power supply.

The abscissa axis of the timing chart represents time, the upper half of the ordinate axis represents the level of the secondary battery 201A in the main device 20, and the lower half of the ordinate axis represents the level of the secondary battery 101A in the front panel 10.

In the case of Fig. 12, the secondary batteries 101A, 201A in an initial state T11 both are in a full state of charge.

Time T12 of Fig. 12 indicates a state where the level of the secondary battery 201A of the main device 20 is lower than the threshold V1. The secondary battery 101A of the front panel 10 remains in a full state of charge. As in the case of time T2 of Fig. 10, the level of the secondary battery 101A of the front panel 10 may be low.

Auxiliary charging is started from time T12. By performing auxiliary charging, the level of the secondary battery 101A of the front panel 10 decreases, while, on the other hand, the level of the secondary battery 201A of the main device 20 increases.

In the case of Fig. 12, charging is stopped because the level of the secondary battery 101A of the front panel 10 serving as an external power supply is lower than the threshold V3 although the level of the secondary battery 201A of the main device 20 has not reached the threshold V2.

### <Summary>

As described above, the front panel 10 that has the built-in secondary battery 101A can be attached to the main device 20 (see Fig. 1) described in the present embodiment. When the front panel 10 that has the built-in secondary battery 101A is attached to the main device 20, the secondary battery 101A of the main device 20 can be charged by using the secondary battery 101A as an external power supply. As a result, the usage time of the main device 20 is longer than that in a case where the front panel 10 that does not have the built-in secondary battery 101A is attached.

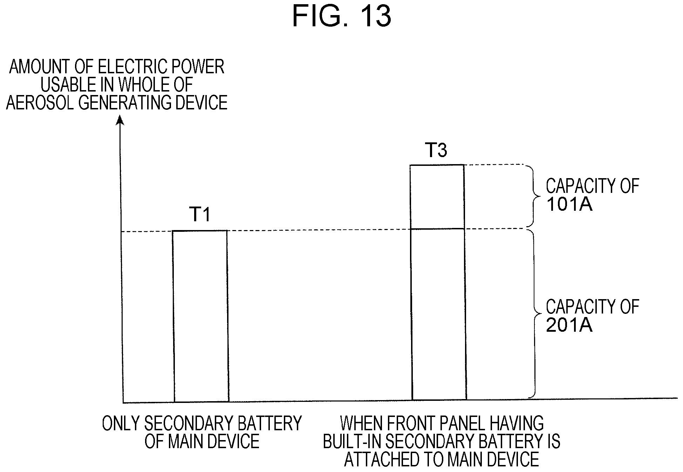

Fig. 13 is a graph that illustrates the amount of electric power usable in the whole of the aerosol generating device 1.

The ordinate axis of the graph represents the amount of electric power usable in the whole of the aerosol generating device 1.

As illustrated in Fig. 13, as compared to the case of only the secondary battery 201A of the main device 20, the amount of electric power usable increases when the front panel 10 that has the built-in secondary battery 101A is attached to the main device 20.

### <Second Embodiment>

In the present embodiment, a case where electric power stored in the secondary battery 101A of the front panel 10 is used for other than charging of the secondary battery 201A of the main device 20 will be described.

The internal configuration and appearance configuration of the aerosol generating device 1 are common to those of the first embodiment.

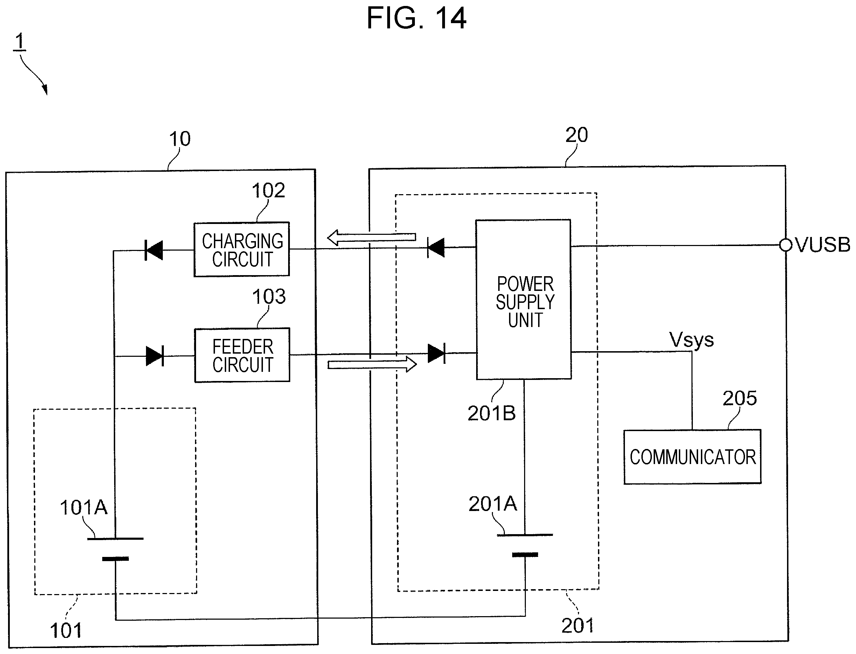

Fig. 14 is a diagram that schematically illustrates a connection relation between the front panel 10 and a power supply system circuit in the main device 20, adopted in the second embodiment. Fig. 14 assigns corresponding reference signs to corresponding parts of Fig. 7.

In the case of Fig. 14, an example in which electric power is supplied from the front panel 10 to the communicator 205 connected to a power supply line to which the system power supply Vsys is supplied is illustrated. Electric power is also supplied to other electronic circuits connected to the power supply line to which the system power supply Vsys is supplied, for example, the sensor 202 (see Fig. 6), part of the notifier 203 (see Fig. 6), and the controller 206 (see Fig. 6).

In Fig. 14, the power supply unit 201B steps down a voltage supplied from the secondary battery 101A of the front panel 10 to generate the system power supply Vsys.

The power supply unit 201B in the present embodiment generates not only charging power for the secondary battery 201A of the main device 20 but also the system power supply Vsys.

Therefore, in the case of the present embodiment, even when the level of the secondary battery 201A of the main device 20 is low, it is possible to maintain a communication function of the main device 20 by using electric power stored in the secondary battery 101A of the front panel 10. Thus, it is possible to upload information stored in the memory 204 of the main device 20 to a smartphone, a server, or the like.

When electric power stored in the secondary battery 101A of the front panel 10 is supplied to the notifier 203, it is possible to notify a user of shortage or the like of the level of the secondary battery 201A of the main device 20. Of course, shortage or the like of the level of the secondary battery 201A of the main device 20 may be uploaded to a smartphone, a server, or the like through the communicator 205.

When the system power supply Vsys is generated from the secondary battery 101A of the front panel 10, supply of charging power to the secondary battery 201A of the main device 20 may be stopped.

In the example of Fig. 14, the communicator 205 is directly connected to the power supply line to which the system power supply is supplied. Alternatively, a power switch may be provided between the power supply line and each electronic circuit, or an electronic circuit to supply electric power may be selectable by preparing a dedicated power supply line for each electronic circuit.

### <Third Embodiment>

In the present embodiment, another example of a case where electric power stored in the secondary battery 101A of the front panel 10 is used for other than charging of the secondary battery 201A of the main device 20 will be described.

In the present embodiment, a case where electric power stored in the secondary battery 101A of the front panel 10 is used to supply electric power to the heater 207 will be described.

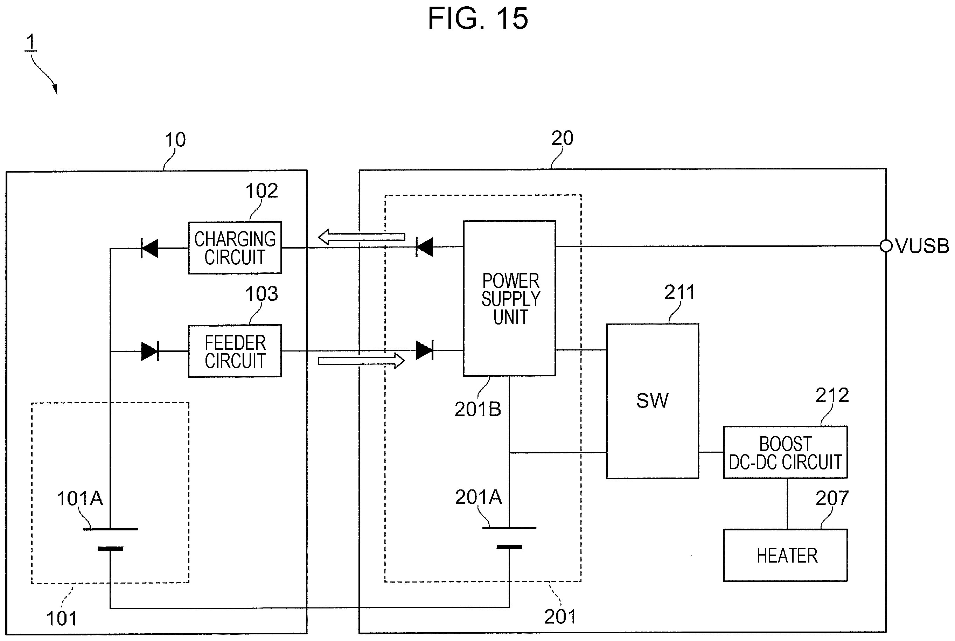

Fig. 15 is a diagram that schematically illustrates a connection relation between the front panel 10 and a power supply system circuit in the main device 20, adopted in the second embodiment. Fig. 15 assigns corresponding reference signs to corresponding parts of Fig. 7.

In the case of Fig. 15, electric power supplied from the secondary battery 201A of the main device 20 and electric power supplied from the secondary battery 101A of the front panel 10 is selectively supply to a boost DC-DC circuit 212 by a switch 211. In the present embodiment, a method in which a supply source of electric power to the heater 207 is selectively switched by using the switch 211 is adopted. When electric power is supplied from two power supply sources at the same time, buck-boost DC-DC circuits are respectively connected to the two power supply sources to equalize the voltages of the two power supply sources and then connected to the power supply line.

The boost DC-DC circuit 212 in Fig. 15 is a circuit that generates a voltage requested by the heater 207.

As in the case of the present embodiment, by supplying electric power for the heater 207 from the secondary battery 101A of the front panel 10, it is possible to increase the amount of generation of an aerosol that can be generated on a single charge. It is also possible to increase the number of stick substrates 210 (see Fig. 6) usable to generate an aerosol on a single charge.

With concurrent use of electric power of the secondary battery 101A of the front panel 10, it is possible to extend a usage time of the aerosol generating device 1 on a single charge.

### <Fourth Embodiment>

In the present embodiment, the front panel 10 with a notifier will be described.

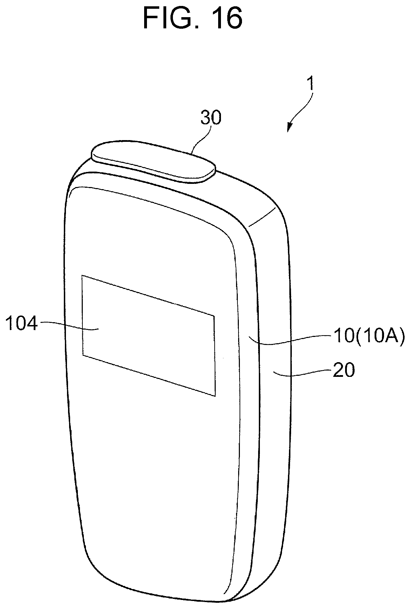

Fig. 16 is a view that illustrates an appearance example of an aerosol generating device 1 to which the front panel 10 with a notifier is attached. Fig. 16 assigns corresponding reference signs to corresponding parts of Fig. 1. The appearance illustrated in Fig. 16 is an example of a front-side view of the aerosol generating device 1 from diagonally above.

The notifier 104 in Fig. 16 is, for example, a liquid crystal display, an organic electro luminescence (EL) display, a micro light emitting diode (LED) display, or another display device, and displays status information of the main device 20, the level of the secondary battery 201A, or the like, as text or an image.

An LED of the same type as the main device 20 may be used as the notifier 104.

In the case of Fig. 16, no window 10B is provided in the front panel 10. Therefore, when the front panel 10 illustrated in Fig. 16 is attached, the LED 20A of the main device 20 side is constantly controlled to an off state. This is because, when the front panel 10 illustrated in Fig. 16 is attached, a turn-on state of the LED 20A cannot be visually recognized from outside.

By constantly turning off the LED 20A of the main device 20, electric power consumption can be reduced as compared to a case where the LED 20A is controlled to an on state or an off state. Accordingly, a rate of reduction in the capacity of the secondary battery 201A reduces, and, when the way of inhalation of an aerosol is the same, it is possible to extend a usable time of the main device 20.

For example, 5 V power supply is connected to the LED 20A. When the front panel 10 illustrated in Fig. 16 is attached, generation of 5 V power supply may be stopped. When the controller 206 is configured to be capable of detecting attachment of the front panel 10 in which a turn-on state of the LED 20A cannot be visually recognized from outside, it is possible to stop generation of 5 V power supply. Attachment of the front panel 10 of this type is configured to be detectable by the controller 206 of the main device 20 through detection of the presence or absence of protrusion or recess provided on a mounting surface, reading of a bar code or QR code (registered trademark) representing the type of the front panel 10 with a camera unit (not shown), or communication with the front panel 10, a smartphone, or the like.

The arrangement position of the notifier 104 illustrated in Fig. 16 is an example and may be used together with the window 10B. Even when the window 10B is used together, turn-on control of the LED 20A may be stopped. Notification of information with the notifier 104 and notification of information through turn-on control of the LED 20A may be used together.

The content of information to be notified by the notifier 104 of the front panel 10 and the content of information to be notified by the LED 20A may overlap each other or may be a complementary relationship. For example, the level of the secondary battery 201A may be notified by both the notifier 104 of the front panel 10 and the LED 20A of the main device 20. Alternatively, for example, the level of the secondary battery 201A may be notified by the LED 20A of the main device 20, and time, error information, a current operation mode (a mode in which the amount of aerosol generated is large or a mode in which the amount of aerosol generated is small) of the main device 20, the history of inhalation of aerosol, and the like may be notified by the notifier 104 of the front panel 10.

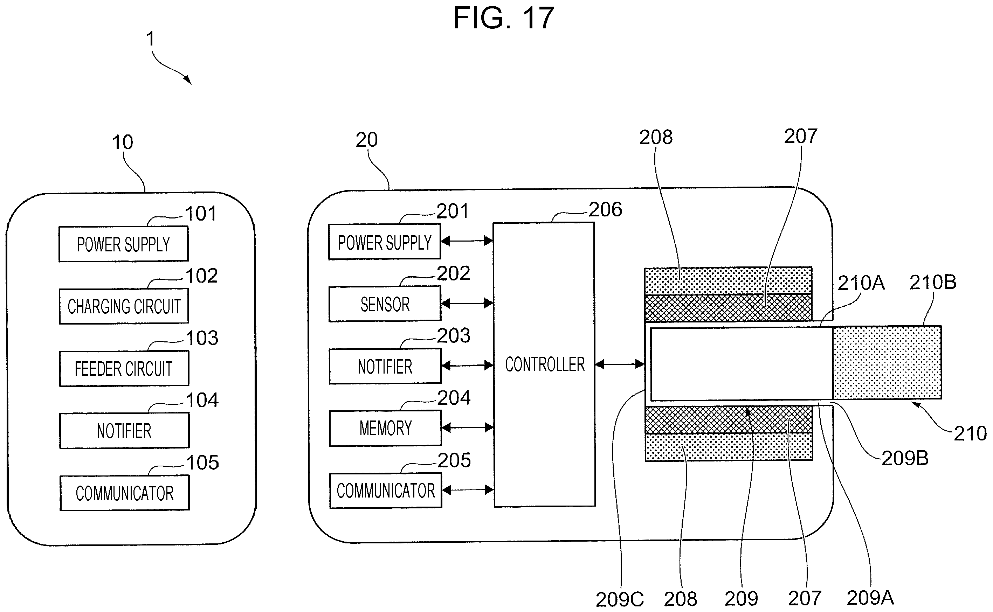

Fig. 17 is a diagram that schematically illustrates the internal configuration of the aerosol generating device 1 used in the fourth embodiment. Fig. 17 assigns corresponding reference signs to corresponding parts of Fig. 6.

As illustrated in Fig. 17, the front panel 10 includes the power supply 101 that stores electricity, the charging circuit 102 that charges the power supply 101 with electric power supplied from the main device 20 side, the feeder circuit 103 that supplies electric power from the power supply 101 to the main device 20 and the like, the notifier 104 that notifies information, and the communicator 105.

The communicator 105 is capable of communicating with the communicator 205 of the main device 20. The communicator 105 acquires status information from the main device 20 and gives the status information to the notifier 104.

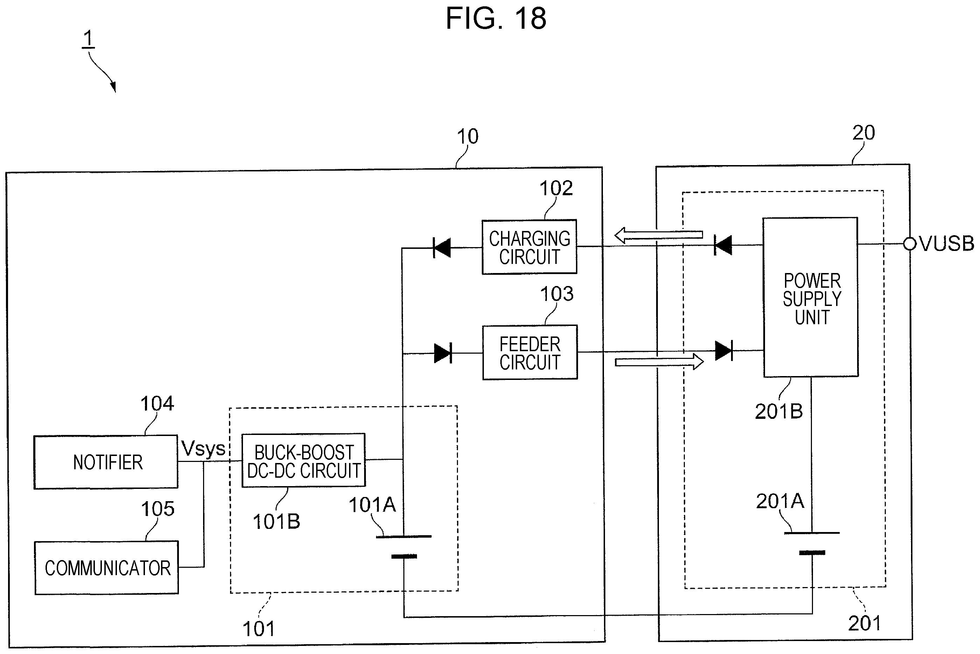

Fig. 18 is a diagram that schematically illustrates a connection relation between the front panel 10 and a power supply system circuit in the main device 20, used in the fourth embodiment.

The buck-boost DC-DC circuit 101B is provided in the power supply 101 illustrated in Fig. 18. The buck-boost DC-DC circuit 101B generates 3.3 V system power supply Vsys from the output voltage of the secondary battery 101A and supplies the system power supply Vsys to the notifier 104. Therefore, electric power of the secondary battery 201A of the main device 20 does not need to be used to notify information with the notifier 104.

In the case of the fourth embodiment, an example in which the notifier 104 and the communicator 105 are provided in the front panel 10 has been described, and a sensor and a memory may be provided.

### <Fifth Embodiment>

In the present embodiment, the front panel 10 with a controller will be described.

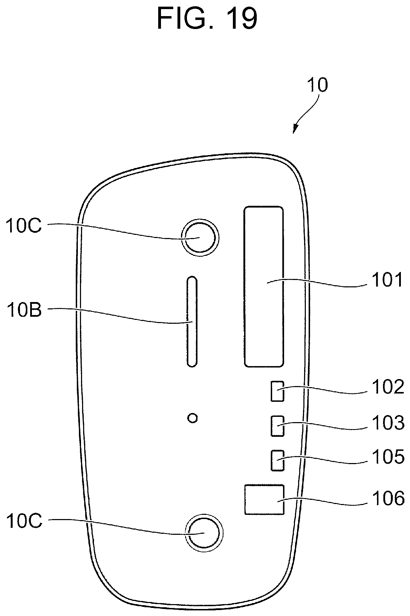

Fig. 19 is a back view of the front panel 10 used in the fifth embodiment. Fig. 19 assigns corresponding reference signs to corresponding parts of Fig. 5.

In the case of Fig. 19, the secondary battery 101A, the charging circuit 102, the feeder circuit 103, the communicator 105, and the controller 106 are installed on the back surface of the front panel 10.

The controller 106 functions as an arithmetic processing unit or a control device that runs various programs.

The controller 106 in the present embodiment, for example, controls supply of electric power from the secondary battery 101A of the front panel 10 to the main device 20 through communication with the controller 206 of the main device 20. For example, the controller 106 controls charging or the like of the secondary battery 101A with electric power supplied from the main device 20. Charging of the secondary battery 101A assumes charging from a USB cable. Charging from the secondary battery 201A of the main device 20 is also possible.

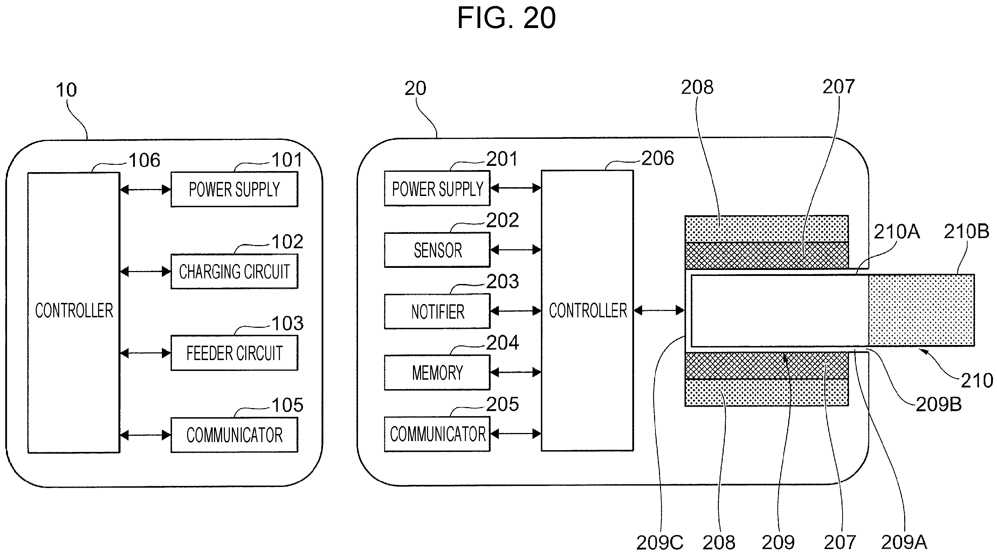

Fig. 20 is a diagram that schematically illustrates the internal configuration of the aerosol generating device 1 used in the fifth embodiment. Fig. 20 assigns corresponding reference signs to corresponding parts of Fig. 17.

The controller 106 communicates with the communicator 205 of the main device 20, a smartphone, or the like through the communicator 105.

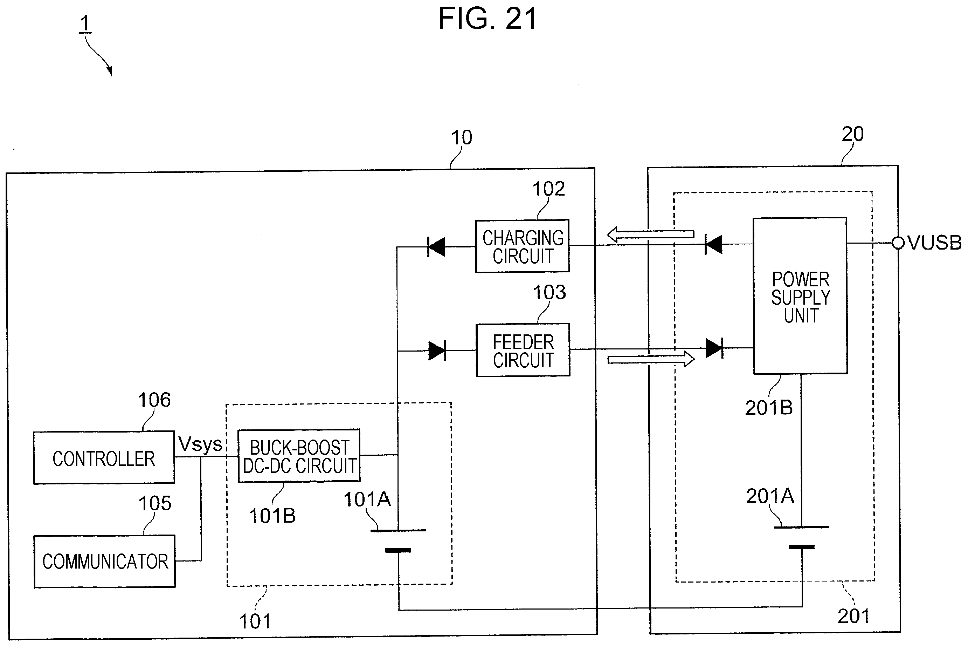

Fig. 21 is a diagram that schematically illustrates a connection relation between the front panel 10 and a power supply system circuit in the main device 20, used in the fifth embodiment. Fig. 21 assigns corresponding reference signs to corresponding parts of Fig. 18.

As illustrated in Fig. 21, the system power supply Vsys is supplied from the secondary battery 101A of the front panel 10 to the controller 106 through the buck-boost DC-DC circuit 101B. Therefore, even when the controller 106 is provided in the front panel 10, electric power of the secondary battery 201A of the main device 20 is not consumed.

Since the front panel 10 in the present embodiment includes the secondary battery 101A, the communicator 105, and the controller 106, the front panel 10 in a state removed from the main device 20 is also capable of autonomous operation. A semiconductor memory needed to execute a function is provided in the controller 106.

### <Other Embodiments>

(1) The embodiments of the present disclosure have been described; however, the technical scope of the present disclosure is not limited to the scope described in the above-described embodiments. It is obvious from the appended claims that the technical scope of the present disclosure also encompasses the above-described embodiments with various modifications or improvements.
(2) In the above-described embodiments, the case where a seam part between the front panel 10 and the main device 20 is continuously flush without any step and provides a unified appearance has been described. Alternatively, a step, a cutout, or the like may be provided at a seam part when there is a unity of appearance with the main device 20.
(3) In the above-described embodiments, the case where the aerosol source is solid has been described. Alternatively, the aerosol source may be liquid. When the aerosol source is liquid, a method in which an aerosol source is guided to a capillary called wick using capillarity and the aerosol source is vaporized by heating a coil wound around the wick is adopted.
(4) In the above-described embodiments, the aerosol generating device that generates an aerosol by heating a solid aerosol source has been described. Alternatively, an aerosol generating device may generate an aerosol by individually heating a solid aerosol source and a liquid aerosol source. The aerosol generating device of this type is also called a hybrid aerosol generating device.
(5) In the above-described embodiments, electric power is supplied from the secondary battery 101A of the front panel 10 to the main device 20. Alternatively, electric power supplied from the secondary battery 101A may be limited to within the front panel 10. When, for example, the notifier 104, the communicator 105, the controller 106, the sensor, and the like are provided in the front panel 10, objects to be supplied with electric power may be limited to these electronic components. In this case, the secondary battery 201A of the main device 20 does not need to be used to supply electric power to electronic components provided in the front panel 10. Therefore, when the multifunctional front panel 10 is attached to the main device 20 as well, a usable time of the secondary battery 201A of the main device 20 is not shortened. In other words, even when the multifunctional front panel 10 is attached to the main device 20, generation of an aerosol is not affected. In this case, the feeder circuit 103 (see Figs. 6 and 7) does not need to be provided in the front panel 10.
(6) In the above-described embodiments, a case where electric power from the secondary battery 101A of the front panel 10 and electric power from the secondary battery 201A of the main device 20 are output to a common power supply line through the power supply unit 201B (see Fig. 14) has been described. Alternatively, electric power supplied from the secondary battery 101A of the front panel 10 to the main device 20 may be supplied to sections of the main device 20 through a dedicated power supply line.

When electric power is supplied through a dedicated power supply line, a buck-boost DC-DC circuit for generating a voltage suitable for each power supply line is provided in the front panel 10 or the main device 20.

When electric power is supplied from the front panel 10 to only a designated electronic component, a dedicated power supply line just needs to be provided for only a designated electronic component.
(7) In the above-described embodiments, the charging circuit 102 is provided in the front panel 10. Alternatively, a configuration not including the charging circuit 102 may be adopted. In this case, the power supply unit 201B of the main device 20 functions as the charging circuit 102.
(8) In the above-described embodiments, a case where the secondary battery 101A is provided in the front panel 10 for the main device 20 that generates an aerosol has been described; however, an electronic device that uses a panel with a secondary battery is not limited to the aerosol generating device 1 (main device 20). In other words, an object to attach a panel with a secondary battery may be a remote control, a game machine, a music player, a car navigation system, a video camcorder, a digital still camera, an electronic dictionary, a calculator, or another electronic device. The panel with a secondary battery here is an example of the cover member. The panel with a secondary battery is not limited to the front panel.
(9) In the above-described embodiments, a film-type lithium ion secondary battery or capacitor is estimated as the secondary battery 101A provided in the front panel 10. Alternatively, a coin shape or a chip shape may be adopted.
(10) In the above-described embodiments, an example in which generation of an aerosol is permitted only when the front panel 10 is attached to the main device 20 has been described. Alternatively, the main device 20 may be configured to be capable of generating an aerosol even in a state where the front panel 10 is not attached.

In this case, attachment of the front panel 10 to the main device 20 is used to expand the function executable in the main device 20. For example, the main device 20 in a state where the front panel 10 is removed operates only on the built-in secondary battery 201A (see Fig. 7), and the main device 20 to which the front panel 10 with a secondary battery is attached has an enabled function of using electric power from the secondary battery 101A (see Fig. 7) of the front panel 10.
(11) In the above-described embodiments, a state where generation of an aerosol is possible has been described as an example of the aerosol generating device 1 (main device 20) in an operable state; however, the aerosol generating device 1 (main device 20) in an operable state is not limited thereto. For example, even when it is not possible to generate an aerosol due to shortage of electric power but when another function is operating, it is the aerosol generating device 1 (main device 20) in an operable state. Examples of another function here include a function of checking and presenting the level of the secondary battery 201A or the like, a function of acquiring and presenting a history of inhalation, and a function of communicating with an external terminal.
(12) In the above-described embodiments, an example in which the front panel 10 in a state of being attached to the main device 20 is pushed to be deformed and the button 20B provided at the main device 20 is operated has been described. Alternatively, a method other than deforming the front panel 10 may be used to input instructions to the main device 20.

For example, a touch panel may be adopted as the notifier 104 (see Fig. 16), and information indicating operation of a user to the touch panel may be notified to the controller 206 (see Fig. 17) of the main device 20 via the communicator 105 (see Fig. 17).

For example, a switch or a button may be disposed at the front panel 10, and presence or absence or the like of operation to them may be notified to the controller 206 (see Fig. 17) of the main device 20 via the communicator 105 (see Fig. 17). The touch panel, the switch, or the like here is an example of the operating portion.

A heat shield structure is adopted to a surface member or inside of the main device 20 of this type.

### <Summary>

The present disclosure includes the following configuration.
(1) A cover member that is attachable to and detachable from an electronic device that operates on a built-in first battery, the cover member including a second battery charged with electric power supplied from the electronic device.
(2) The cover member according to (1) further including a charging circuit that charges the second battery with electric power supplied from the electronic device.
(3) The cover member according to (1) or (2) further including a feeder circuit that supplies electric power to the electronic device.
(4) In the cover member according to (3), when a level of the first battery is lower than or equal to a predetermined reference, the feeder circuit charges the first battery.
(5) In the cover member according to (3), supply of electric power by the feeder circuit is performed in response to instructions from the electronic device.
(6) In the cover member according to (3), the feeder circuit supplies electric power to a communicator of the electronic device.
(7) The cover member according to any one of (1) to (6) further including a notifier that notifies information upon receiving electric power supplied from the second battery.
(8) In the cover member according to any one of (3) to (6), the electronic device is an aerosol generating device including a heater that heats an aerosol source, and the feeder circuit supplies electric power to the heater.
(9) In the cover member according to any one of (1) to (8), when the electronic device is an aerosol generating device including a heater that heats an aerosol source, a main body attached to the aerosol generating device covers part of a surface of the aerosol generating device in an operable state.
(10) In the cover member according to (8) or (9), attachment of a main body to the aerosol generating device is one of conditions that the aerosol source is allowed to be heated by the heater.
(11) In the cover member according to any one of (1) to (10), a main body is allowed to operate a switch on the electronic device side by a user pushing the main body in a state attached to the electronic device.
(12) The cover member according to any one of (1) to (10) further including an operating portion that notifies the electronic device upon receiving operation of a user.
(13) In the cover member according to any one of (1) to (11), a main body attached to the electronic device provides a unified appearance with a part not covered with the main body in the electronic device in an operable state.

### Reference Signs List

1 aerosol generating device
10 front panel
104, 203 notifier
10A main body panel
10B window
10C, 20C magnet
20 main device
101A, 201A secondary battery
20A LED
20B button
21 USB connector
22 hole
30 shutter
101, 201 power supply
101B buck-boost DC-DC circuit
102 charging circuit
103 feeder circuit
105,205 communicator
106, 206 controller
201B power supply unit
202 sensor
203 notifier
204 memory
207 heater
208 heat insulator
209 holder
210 stick substrate
211 switch
212 boost DC-DC circuit

## Claims

1. A cover member that is attachable to and detachable from an electronic device that operates on a built-in first battery, the cover member comprising
a second battery charged with electric power supplied from the electronic device.

2. The cover member according to claim 1, further comprising
a charging circuit that charges the second battery with electric power supplied from the electronic device.

3. The cover member according to claim 1 or 2, further comprising
a feeder circuit that supplies electric power to the electronic device.

4. The cover member according to claim 3, wherein
when a level of the first battery is lower than or equal to a predetermined reference, the feeder circuit charges the first battery.

5. The cover member according to claim 3, wherein
supply of electric power by the feeder circuit is performed in response to instructions from the electronic device.

6. The cover member according to claim 3, wherein
the feeder circuit supplies electric power to a communicator of the electronic device.

7. The cover member according to any one of claims 1 to 6, further comprising
a notifier that notifies information upon receiving electric power supplied from the second battery.

8. The cover member according to any one of claims 3 to 6, wherein
the electronic device is an aerosol generating device including a heater that heats an aerosol source, and
the feeder circuit supplies electric power to the heater.

9. The cover member according to any one of claims 1 to 8, wherein
the electronic device is an aerosol generating device including a heater that heats an aerosol source, and
a main body attached to the aerosol generating device covers part of a surface of the aerosol generating device in an operable state.

10. The cover member according to claim 8 or 9, wherein
attachment of a main body to the aerosol generating device is one of conditions that the aerosol source is allowed to be heated by the heater.

11. The cover member according to any one of claims 1 to 10, wherein
a main body is allowed to operate a switch on the electronic device side by a user pushing the main body in a state attached to the electronic device.

12. The cover member according to any one of claims 1 to 10, further comprising
an operating portion that notifies the electronic device upon receiving operation of a user.

13. The cover member according to any one of claims 1 to 11, wherein
a main body attached to the electronic device provides a unified appearance with a part not covered with the main body in the electronic device in an operable state.
